# EUROPÄISCHE PATENTANMELDUNG

(11) **EP 3 159 101 A1**
(43) Veröffentlichungstag der Anmeldung: **26.04.2017**
(21) Anmeldenummer: 16002015.2
(22) Anmeldetag: 15.09.2016
(51) Int. Cl.: B23Q 1/25

(54) **VERSTELLEINHEIT**

(30) Priorität: 19.10.2015 DE 102015013543
(71) Anmelder: AUDI AG, 85045 Ingolstadt (DE)
(72) Erfinder: Bögelein, Tobias, DE - 91161 Hilpoltstein (DE); Hartl, Oliver, DE - 85077 Manching (DE); Schebesch, Siegfried, DE - 85123 Karlskron (DE)

(57) **Zusammenfassung**

Die Erfindung betrifft eine Verstelleinheit (2) zum Positionieren von mindestens zwei Bauteilen relativ zueinander, die eine Trägereinheit (4), eine Verfahreinheit (6) und eine Verstellmechanik aufweist, wobei die Trägereinheit (4) an einer Außenwandung mindestens eine Montagefläche (10) aufweist, wobei die Verfahreinheit (6) an einer Außenwandung mindestens eine Montagefläche aufweist, wobei die mindestens eine Montagefläche (10) der Trägereinheit (4) mit mindestens einem ersten Bauteil zu verbinden ist, wobei die mindestens eine Montagefläche der Verfahreinheit (6) mit mindestens einem zweiten Bauteil zu verbinden ist, wobei ein Abstand zwischen der mindestens einen Montagefläche (10) der Trägereinheit (4) und der mindestens einen Montagefläche der Verfahreinheit (6) über die Verstellmechanik einzustellen ist, wodurch wiederum eine Position der mindestens zwei Bauteile relativ zueinander einzustellen ist.

## Beschreibung

Die Erfindung betrifft eine Verstelleinheit zum Positionieren von mindestens zwei Bauteilen relativ zueinander und ein Verfahren zum Positionieren von mindestens zwei Bauteilen relativ zueinander.

Bei einer Montage einer Vorrichtung, die mehrere Bauteile umfasst, sind üblicherweise einzelne Bauteile, bevor diese aneinander befestigt werden, relativ zueinander zu positionieren, wobei für die Bauteile ein vorgeschriebener Abstand einzuhalten ist. Weiterhin sind die Bauteile in dem vorgeschriebenen Abstand relativ zueinander zu fixieren, wobei als Werkzeuge bspw. Abstandshalter einzusetzen sind.

Diesbezüglich wird auch auf die Druckschrift DE 1 903 576, die ein Fixier- und Spannsystem für Werkstücke beschreibt, auf die Druckschrift EP 0 237 490 B1, die eine Anschlageinheit und einen Bausatz zum Spannen von Werkstücken beschreibt, und auf die Druckschrift EP 0 074 565 A2, die eine Palette zum Ausrichten und Aufspannen von Werkstücken beschreibt, verwiesen.

Vor diesem Hintergrund werden eine Verstelleinheit und ein Verfahren mit den Merkmalen der unabhängigen Patentansprüche vorgestellt. Ausgestaltungen der Verstelleinheit und des Verfahrens gehen aus den abhängigen Patentansprüchen und der Beschreibung hervor.

Die erfindungsgemäße Verstelleinheit ist zum Positionieren von mindestens zwei Bauteilen relativ zueinander ausgebildet und umfasst eine Trägereinheit und eine Verfahreinheit, die zu einem quaderförmigen Verstellkopf mit sechs Außenseiten verbunden sind, und eine Verstellmechanik. Die Trägereinheit und die Verfahreinheit weisen an ihren Außenwandüngen jeweils mindestens eine Montagefläche auf. Dabei ist die mindestens eine Montagefläche der Trägereinheit mit mindestens einem ersten Bauteil lösbar zu verbinden, wohingegen die mindestens eine Montagefläche der Verfahreinheit mit mindestens einem zweiten Bauteil lösbar zu verbinden ist. Ein Abstand zwischen der Trägereinheit und der Verfahreinheit ist über die Verstellmechanik in einer Richtung zu variieren und/oder einzustellen, wodurch wiederum eine Position der mindestens zwei Bauteile relativ zueinander und/oder ein Abstand zwischen den mindestens zwei Bauteilen in derselben Richtung einzustellen ist.

In Ausgestaltung weist die Trägereinheit an der Außenwandung eine erste Montagefläche auf. Die Verfahreinheit weist an einer Außenwandung ebenfalls eine erste Montagefläche auf. Dabei ist die erste Montagefläche der Trägereinheit parallel zu der ersten Montagefläche der Verfahreinheit angeordnet.

Weiterhin umfasst die Außenwandung der Trägereinheit eine zweite Montagefläche, die relativ zu der ersten Montagefläche um 90° orientiert ist, wobei die erste und die zweite Montagefläche eine gemeinsame Kante aufweisen. Die Außenwandung der Verfahreinheit weist auch eine zweite Montagefläche auf, die relativ zu der ersten Montagefläche um 90° orientiert ist, wobei die erste und die zweite Montagefläche eine gemeinsame Kante aufweisen. Die zweite Montagefläche der Trägereinheit und die zweite Montagefläche der Verfahreinheit sind zueinander parallel angeordnet. Dabei ist mindestens ein Bauteil alternativ oder ergänzend mit mindestens einer zweiten Montagefläche lösbar zu verbinden.

Jede Montagefläche weist ein Feld aus Bohrungen auf, über die mindestens eine Montagefläche mit dem mindestens einen Bauteil direkt oder indirekt zu verbinden ist. Hierbei ist möglich, dass mindestens eine Schraube, die an dem mindestens einen Bauteil angeordnet und/oder anzuordnen ist, in eine Bohrung einer jeweiligen Montagefläche zu schrauben ist.

Die Verstelleinheit umfasst mindestens ein normales und/oder standardisiertes Konstruktionselement, das an mindestens einer Montagefläche wieder lösbar zu befestigen ist. Hierbei ist das mindestens eine Konstruktionselement mit der mindestens einen Montagefläche zu verschrauben. Somit ist bspw. ein Bauteil über ein Konstruktionselement indirekt mit einer Montagefläche zu verbinden. Das mindestens eine Konstruktionselement umfasst mindestens eine Schiene mit Bohrungen. Falls ein derartiges Konstruktionselement mehrere Schienen, bspw. zwei Schienen, die zueinander unter einem Winkel von bspw. 90° orientiert sind, aufweist, ist dieses Konstruktionselement als Winkelelement ausgebildet und/oder zu bezeichnen.

Die Verstellmechanik weist einen elektrischen Motor, ein Getriebe, eine Trapezgewindespindel, eine Trapezgewindemutter sowie mindestens eine Linearführungsanordnung auf, über die die Trägereinheit und die Verfahreinheit relativ zueinander zu positionieren und/oder zu beabstanden sind. Die mindestens eine Linearführungsanordnung umfasst einen Linearführungsstab und eine Linearführungshülse, die zueinander koaxial angeordnet und relativ zueinander teleskopartig verschiebbar sind. Dabei ist der Linearführungsstab zumindest abschnittsweise in der Linearführungshülse angeordnet.

Außerdem weist die Verstelleinheit mindestens ein Modul, bspw. einen Absolutwertgeber und/oder einen Referenzschalter, auf, mit dem ein Abstand zwischen den mindestens zwei Bauteilen sensorisch zu erfassen ist.

Für die Verstelleinheit ist eine Richtung vorgesehen, entlang der der Abstand zwischen der Trägereinheit und der Verfahreinheit und somit zwischen den beiden ersten Montageflächen zu variieren und somit zu verfahren ist, wobei der Abstand der beiden Bauteile in derselben Richtung zu variieren ist.

Die Verstelleinheit ist bspw. als Komponente einer Vorrichtung zum Bauen einer Karosserie eines Kraftfahrzeugs ausgebildet und/oder als Komponente einer derartigen Vorrichtung zu verwenden. Üblicherweise weist die Vorrichtung zum Bau der Karosserie des Kraftfahrzeugs mindestens eine beschriebene Verstelleinheit auf.

Die Verstelleinheit eignet sich aufgrund ihrer hohen Stabilität und geringen Baugröße für den Einsatz in der Vorrichtung zum Bau der Karosserie. Dabei wird mindestens eine Verstelleinheit zwischen zwei Komponenten und/oder Bauteilen der Vorrichtung montiert, wobei eine erste Komponente z. B. als Grundplatte der Vorrichtung und eine zweite Komponente z. B. als Blechteilauflage, als Spannstelle zum Spannen von Blechteilen zueinander oder als Stiftziehern zur Blechteilpositionierung ausgebildet ist. Üblicherweise umfasst die Vorrichtung mehrere Verstelleinheiten, deren Trägereinheiten und Verfahreinheiten in unterschiedlichen Richtungen zu verfahren sind. Dadurch ist es u. a. möglich, dass mit jeweils einer Verstelleinheit eine relative Position von zwei Komponenten der Vorrichtung automatisiert verändert werden kann. Die Verstelleinheit ermöglicht somit eine automatisierte Typflexibilität der Vorrichtung zum Bau der Karosserie. Dagegen sind bei bekannten Vorrichtungen zum Bau von Karosserien einzelne Komponenten hinsichtlich ihrer relativen Position manuell zu verstellen, wobei zusätzlich Abstimmplatten zu verwenden sind.

Das erfindungsgemäße Verfahren zum Positionieren von mindestens zwei Bauteilen relativ zueinander wird mit einer Verstelleinheit durchgeführt, die eine Trägereinheit, eine Verfahreinheit und eine Verstellmechanik aufweist. Die Trägereinheit weist an einer Außenwandung mindestens eine Montagefläche auf. Außerdem weist die Verfahreinheit an einer Außenwandung ebenfalls mindestens eine Montagefläche auf. Bei Durchführung des Verfahrens wird ein Abstand zwischen der mindestens einen Montagefläche der Trägereinheit und der mindestens einen Montagefläche der Verfahreinheit über die Verstellmechanik in einer Richtung variiert und/oder eingestellt, wodurch wiederum eine Position der Bauteile relativ zueinander und/oder ein Abstand zwischen den mindestens zwei Bauteilen eingestellt wird.

In Ausgestaltung des Verfahrens ist zwischen den mindestens zwei Bauteilen ein Abstand mit einem Sollwert einzustellen, wobei ein jeweils aktueller Istwert des Abstands mit mindestens einem Modul zum sensorischen Erfassen des Abstands erfasst wird, wobei bei einer Abweichung des Istwerts von dem Sollwert ein Abstand zwischen der Trägereinheit und der Verfahreinheit angepasst wird. Außerdem wird ein Differenzwert zwischen dem Sollwert und dem Istwert gebildet, wobei ein Abstand zwischen der Trägereinheit und der Verfahreinheit um den Differenzwert verändert wird. Falls der Istwert kleiner als der Sollwert ist, wird der Istwert um den Differenzialwert vergrößert. Falls der Istwert größer als der Sollwert ist, wird der Istwert um den Differenzialwert reduziert.

Je nach Definition umfasst die Verstelleinheit den sogenannten Verstellkopf, der quaderförmig ausgebildet ist, wobei eine Höhe bzw. Länge dieses Verstellkopfs durch Einstellen des Abstands zwischen der Trägereinheit und der Verfahreinheit in der vorgesehenen Richtung zu variieren sowie einzustellen ist, wodurch wiederum auch die Länge bzw. Höhe der gesamten Verstelleinheit zu variieren und somit einzustellen ist.

Der Verstellkopf ist dabei quaderförmig ausgebildet, wobei auf einer ersten und einer zweiten Außenseite des Verstellkopfs, die zueinander unmittelbar benachbart sind, die beiden Montageflächen der Trägereinheit angeordnet sind. Die beiden Montageflächen der Verfahreinheit sind ebenfalls an unmittelbar benachbarten Seiten des Verstellkopfs angeordnet. Weiterhin umfasst die Verfahreinheit eine Hülse, die aus den beiden Montageflächen und drei Hüllwänden gebildet sind. Insgesamt sind eine dritte und vierte Außenseite des Verstellkopfs durch die beiden Montageflächen der Verfahreinheit begrenzt und/oder abgedeckt. Eine fünfte und eine sechste Außenseite des Verstellkopfs sind durch zwei Hüllwände der Hülse der Verfahreinheit abgedeckt. Eine weitere Hüllwand der Hülse der Verfahreinheit ist neben der zweiten Montagefläche der Trägereinheit an der zweiten Außenseite des Verstellkopfs angeordnet. Die Hülse der Verfahreinheit ist über die Verstellmechanik relativ zu dem Körper der Trägereinheit zu verschieben, wodurch ebenfalls ein Abstand von Montageflächen der Trägereinheit und der Verfahreinheit sowie von Bauteilen, die mit den Montageflächen lösbar verbunden sind, zu variieren ist.

An der ersten Außenseite des Verstellkopfs sind neben der ersten Montagefläche der Trägereinheit noch das Gehäuse für mindestens eine Komponente der Verstellmechanik sowie mindestens ein Modul zum Erfassen eines Abstands angeordnet. Demnach ist die erste Montagefläche der Trägereinheit etwas kleiner als die anderen Montageflächen.

Es ist jedoch in einer alternativen Ausgestaltung denkbar, dass sämtliche Komponenten der Verstellmechanik innerhalb des Verstellkopfs angeordnet sind, da der Abstand zwischen der Trägereinheit und der Verfahreinheit unabhängig von einer konkreten Position der Komponenten der Verstellmechanik einstellbar und/oder variierbar ist. Falls die Verstellmechanik jedoch komplett in dem Verstellkopf angeordnet ist, kann auf das hierfür vorgesehene zusätzliche Gehäuse an einer Außenseite des Verstellkopfs verzichtet werden und die erste Montagefläche der ersten Trägereinheit eine größere Fläche aufweisen.

Mit der Verstelleinheit ist eine Montage von Bauteilen und/oder eine relative Positionierung dieser Bauteile zueinander flexibel zu gestalten. An den Bohrungen der Montageflächen sind unterschiedliche Winkel, die als Norm- und/oder Standardelemente ausgebildet sein können, wieder lösbar und somit temporär zu befestigen. Alternativ oder ergänzend ist auch jedes Bauteil an einer Montagefläche über Schrauben vorübergehend und somit auch wieder lösbar zu befestigen.

Sofern zwei Bauteile über die Verstelleinheit während einer durchzuführenden Montage relativ zueinander zu positionieren und/oder zu beabstanden sind, ist üblicherweise das mindestens eine erste Bauteil an der mindestens einen Montagefläche der Trägereinheit vorübergehend zu befestigen, wohingegen das mindestens eine zweite Bauteil an der mindestens einen Montagefläche der Verfahreinheit vorübergehend zu befestigen ist. Ein Abstand zwischen den Bauteilen ist in einer Richtung senkrecht zu der ersten Montagefläche der Trägereinheit sowie der ersten Montagefläche der Verfahreinheit variabel einzustellen.

Hierbei ist es möglich, einen Abstand der beiden Bauteile durch Vergrößern eines Abstands der Trägereinheit zu der Verfahreinheit zu vergrößern oder durch Verringern des Abstands zwischen der Trägereinheit und der Verfahreinheit zu reduzieren.

Die Verstelleinheit ist weiterhin zwischen mindestens zwei Bauteilen einzuspannen und/oder einzuklemmen. Der Istwert des Abstands ist durch das mindestens eine Modul zum Erfassen des Abstands zu ermitteln. Dabei ist möglich, dass ein derartiges Modul als Komponente der Verstellmechanik ausgebildet ist und/oder mit der Verstellmechanik zusammenwirkt, wodurch jeweils ein aktueller Istwert des Abstands zwischen der Trägereinheit und der Verfahreinheit zu ermitteln ist.

Eine konkrete Form der Montageflächen und/oder der Felder aus Bohrungen für Schraubverbindungen auf den Montageflächen sind für einen jeweiligen Anwendungszweck zu wählen. Dabei ist es möglich, den Körper der Trägereinheit durch jeweils vorgesehene Montageflächen zu bestücken. Entsprechend ist die Hülse der Verfahreinheit, auf der Montageflächen der Verfahreinheit angeordnet sind, jeweils zu bestücken. In der Regel ist für den Abstand der Bauteile und somit für den Abstand der Trägereinheit und der Verfahreinheit ein Sollwert einzustellen.

Allerdings weisen die Trägereinheit und die Verfahreinheit bei einer Durchführung des Verfahrens zueinander üblicherweise einen Abstand auf, der einem Istwert entspricht, der von dem Sollwert abweicht. Bei Durchführung des Verfahrens wird der vorgegebene Sollwert mit dem aktuellen Istwert verglichen. Falls der Istwert um einen Differenzwert kleiner als der Sollwert ist, wird der Istwert um den Differenzwert vergrößert. Falls der Istwert um einen Differenzwert größer als der Sollwert ist, wird der Istwert um den Differenzwert verringert.

Ein derartiger Vergleich des vorgegebenen Sollwerts mit dem üblicherweise sensorisch aktuell erfassten Istwert ist in einer Ausgestaltung der Verstelleinheit mit einer hierfür vorgesehenen Steuereinheit durchzuführen, mit der auch andere Schritte des Verfahrens zu steuern sind. Somit ist es möglich, den Abstand zwischen den Bauteilen mit der Steuereinheit automatisch statt ansonsten üblich manuell einzustellen. Die Steuereinheit oder eine entsprechende Recheneinheit ist wie die Verstellmechanik in dem Gehäuse und/oder dem Verstellkopf angeordnet.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt in schematischer Darstellung eine Ausführungsform der erfindungsgemäßen Verstelleinheit aus unterschiedlichen Perspektiven.
Figur 2 zeigt in schematischer Darstellung erste Details der Ausführungsform der erfindungsgemäßen Verstelleinheit aus unterschiedlichen Perspektiven.
Figur 3 zeigt einen mechanischen Aufbau der Ausführungsform der Verstelleinheit in schematischer Explosionsdarstellung.
Figur 4 zeigt in schematischer Darstellung weitere Details der Ausführungsform der erfindungsgemäßen Verstelleinheit aus unterschiedlichen Perspektiven.
Figur 5 zeigt in schematischer Darstellung ein Beispiel für eine Anwendung der erfindungsgemäßen Verstelleinheit.

Die Figuren werden zusammenhängend und übergreifend beschrieben. Gleichen Komponenten sind dieselben Bezugsziffern zugeordnet.

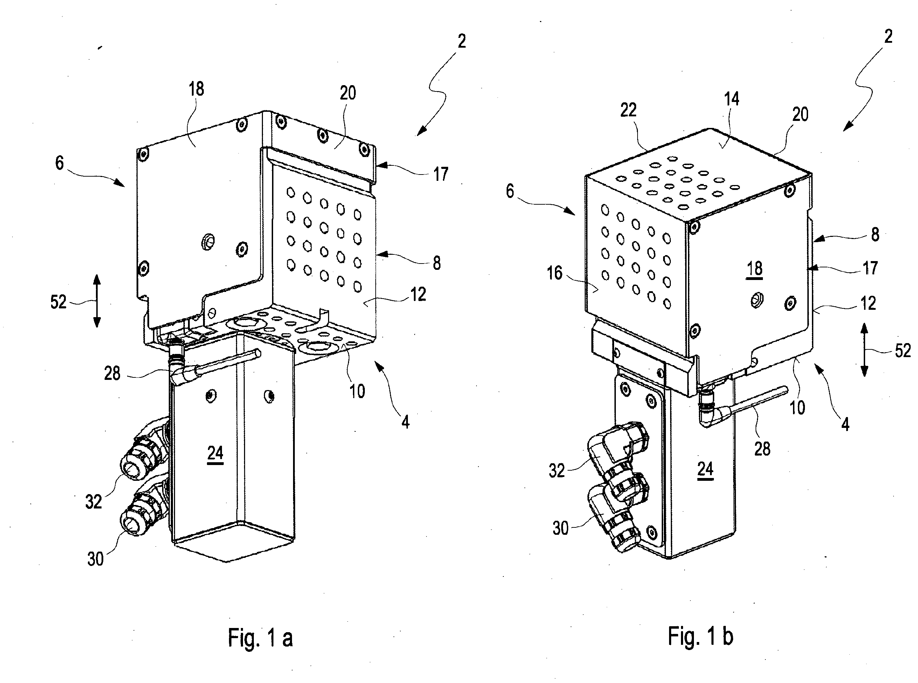

Die Ausführungsform der erfindungsgemäßen, hier mechatronischen Verstelleinheit 2 ist in Figur 1 a aus einer ersten Perspektive und in Figur 1 b aus einer zweiten Perspektive dargestellt. Die Verstelleinheit 2 umfasst eine Trägereinheit 4 und eine Verfahreinheit 6, deren relativer Abstand variabel einzustellen ist.

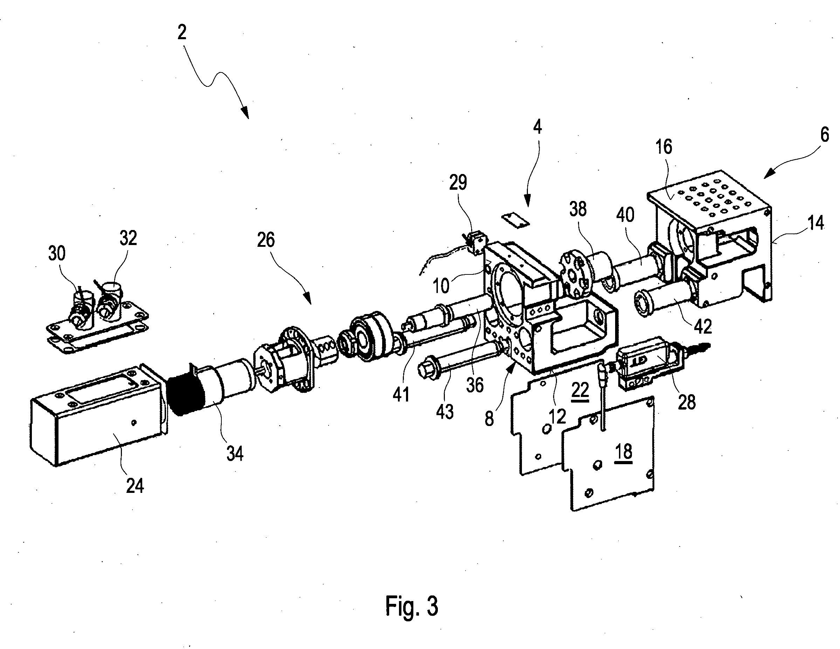

Die Trägereinheit 4, die auch als Basiseinheit zu bezeichnen ist, umfasst einen Körper 8 mit einer Außenwandung, die sich über zwei rechteckige, unmittelbar benachbarte Montageflächen 10, 12 erstreckt, die zueinander unter einem Winkel von 90° angeordnet sind. Dabei sind die Montageflächen 10, 12 an dem Körper 8 der Trägereinheit 4 angeordnet. Außerdem sind, wie insbesondere in Figur 3 gezeigt, an jener Seite des Körpers 8, an dem auch die erste Montagefläche 10 angeordnet ist, ein Gehäuse 24 für eine Verstellmechanik 26, ein Absolutwertgeber 28 und ein Referenzschalter 29 angeordnet. An dem Gehäuse 24 sind wiederum elektrische Anschlüsse 30, 32 für einen elektrischen Motor der Verstellmechanik 26 angeordnet.

Die Verfahreinheit 6 umfasst eine Hülse 17 mit einer Außenwandung, an der sich ebenfalls zwei rechteckige, unmittelbar benachbarte Montageflächen 14, 16 erstrecken, die zueinander unter einen Winkel von 90° angeordnet sind. Weiterhin umfasst die Verfahreinheit 6 an der Hülse 17 drei Hüllwände 18, 20, 22. Die Hülse 17 der Verfahreinheit 6 umhüllt bzw. umschließt den Körper 8 der Trägereinheit 4 zumindest teilweise.

Die Trägereinheit 4 bzw. deren Körper 8 sowie die über die Verstellmechanik 26 relativ hierzu verfahrbare und/oder positionierbare Verfahreinheit 6 bzw. deren Hülse 17 bilden einen in seiner Länge verstellbaren quaderförmigen Verstellkopf mit insgesamt sechs Außenseiten. Die Länge des Verstellkopfs und somit der Verstelleinheit 2 ist senkrecht zu der ersten Montagefläche 10 der Trägereinheit 4 sowie senkrecht zu der ersten Montagefläche 14 der Verfahreinheit 6 zu variieren.

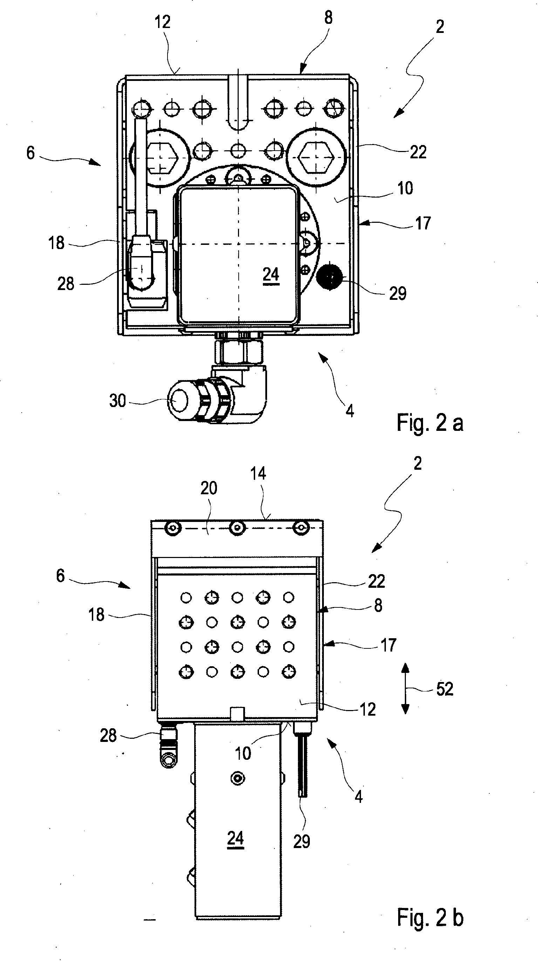

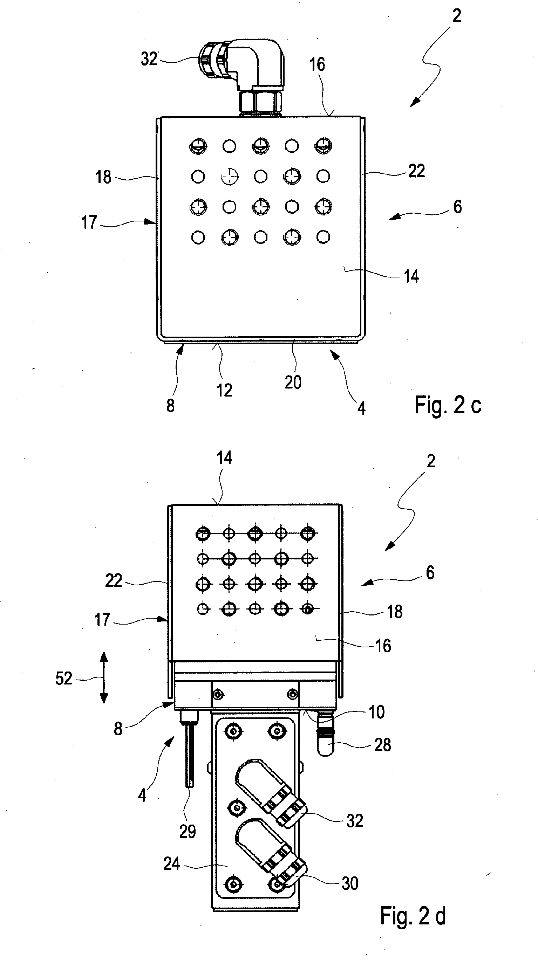

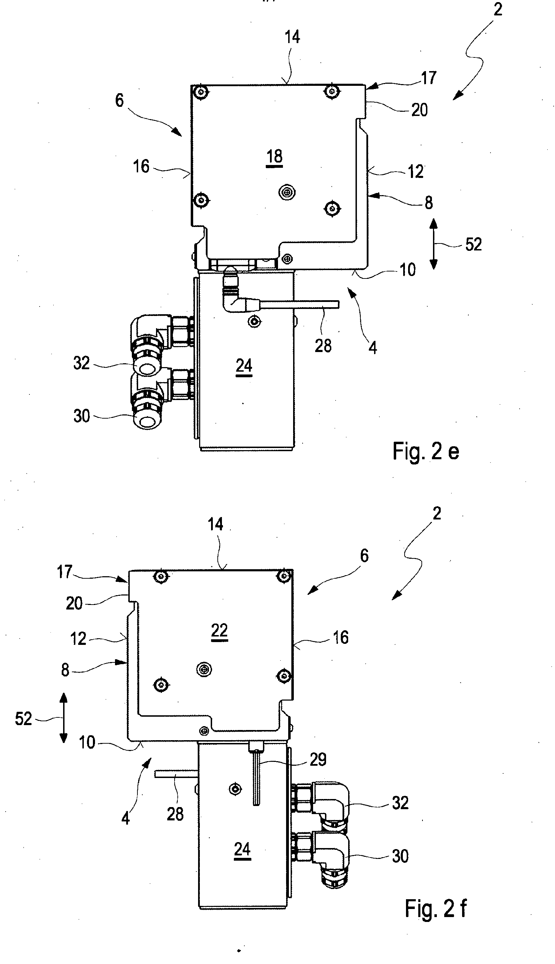

Die Figuren 2a, 2b, 2c, 2d, 2e und 2f zeigen jeweils ein Detail der Ausführungsform der erfindungsgemäßen Verstelleinheit 2 aus einer anderen Perspektive. Im Detail zeigt Figur 2a (erste Außenseite des Verstellkopfs) eine Draufsicht auf die erste Montagefläche 10 der Trägereinheit 4 und auf das Gehäuse 24 für die Verstellmechanik 26. Figur 2b (zweite Außenseite des Verstellkopfs) zeigt in Draufsicht die zweite Montagefläche 12 der Trägereinheit, eine zweite Hüllwand 20 der Verfahreinheit 6 und das Gehäuse 24. Figur 2c (dritte Außenseite des Verstellkopfs) zeigt die erste Montagefläche 14 der Verfahreinheit 6 in Draufsicht. Figur 2d (vierte Außenseite des Verstellkopfs) zeigt die zweite Montagefläche 16 der Verfahreinheit 6 sowie das Gehäuse 24 in Draufsicht. Figur 2e (fünfte Außenseite des Verstellkopfs) zeigt eine erste Hüllwand 18 der Verfahreinheit 6 und das Gehäuse 24 in Draufsicht. Figur 2f (sechste Außenseite des Verstellkopfs) zeigt eine dritte Hüllwand 22 der Verfahreinheit 6 und das Gehäuse 24 in Draufsicht.

Außerdem zeigt Figur 3 eine schematische Explosionsdarstellung der Ausführungsform der erfindungsgemäßen Verstelleinheit 2, wobei in Figur 3 auch Komponenten der Verstellmechanik 26 gezeigt sind, die in den anderen Figuren nicht zu erkennen sind. Dabei umfasst die Verstellmechanik 26 als Komponenten eine Kombination 34 aus dem elektrischen Motor und einem Getriebe, die hier in dem Gehäuse 24 angeordnet sind, eine Trapezgewindespindel 36, eine Trapezgewindemutter 38, eine erste und eine zweite Linearführungshülse 40, 42 sowie einen ersten und einen zweiten Linearführungsstab 41, 43. Dabei bilden der erste Linearführungsstab 41 und die erste Linearführungshülse 40 eine erste Linearführungsanordnung. Der zweite Linearführungsstab 43 und die zweite Linearführungshülse 42 bilden eine zweite Linearführungsanordnung.

Außerdem greifen die Trapezgewindespindel 36 und die Trapezgewindemutter 38 ineinander und wirken zusammen. Dabei ist hier die Trapezgewindespindel 36 mit der Trägereinheit 4 bzw. deren Körper 8 und die Trapezgewindemutter 38 mit der Verfahreinheit 6 bzw. deren Hülse 17 (Figur 1), von der in Figur 3 nur die Hüllwände 18, 22 gezeigt sind, verbunden. Die Trapezgewindespindel 36 und die Trapezgewindemutter 38 sind über den elektrischen Motor und das Getriebe relativ zueinander zu verschieben sowie zueinander zu arretieren, wodurch wiederum die Trägereinheit 4 und die Verfahreinheit 6 relativ zueinander zu verschieben sowie zu fixieren sind. Außerdem sind die beiden Linearführungshülsen 40, 42 an der Verfahreinheit 6 und die beiden Linearführungsstäbe 41, 43 an der Trägereinheit 4 befestigt. Jeweils ein Linearführungsstab 41, 43 ist von jeweils einer Linearführungshülse 40, 42 umschlossen und relativ zu dieser zu verschieben.

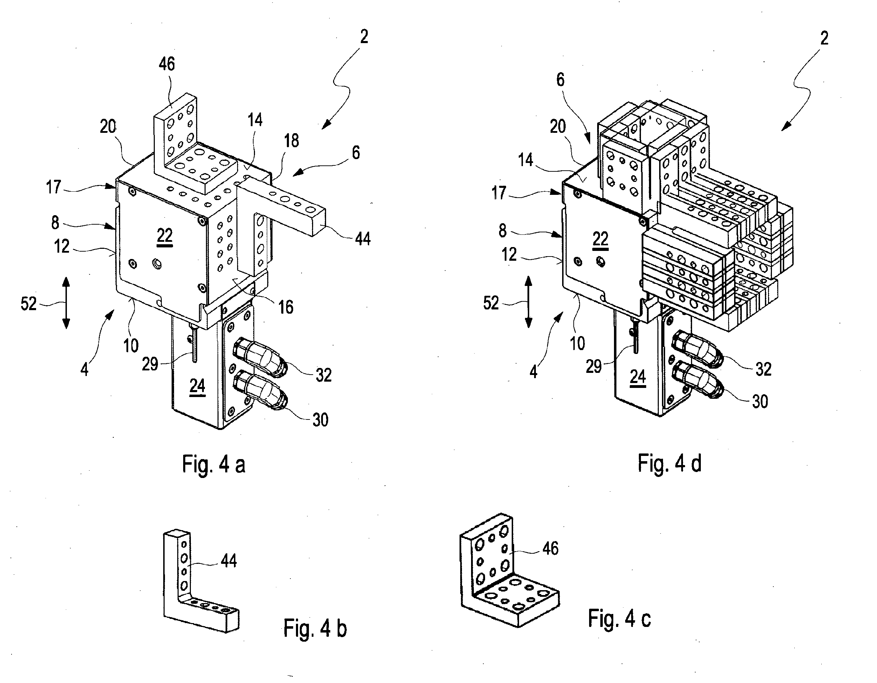

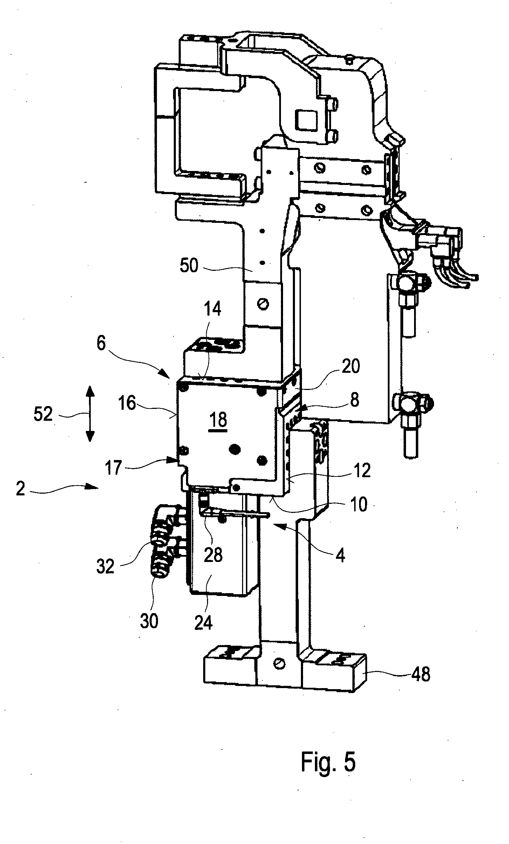

Weitere Details der Ausführungsform der erfindungsgemäßen Verstelleinheit 2 sind in den Figuren 4a, 4b, 4c, 4d und 5 schematisch dargestellt.

Dabei zeigt Figur 4b ein erstes Beispiel für ein als Winkelelement ausgebildetes Konstruktionselement 44 und Figur 4c ein zweites Beispiel für ein als Winkelelement ausgebildetes Konstruktionselement 46, die jeweils Bohrungen aufweisen. Diese bspw. norminierten und/oder standardisierten Konstruktionselemente 44, 46 sind, wie anhand der Figuren 4a und 4d angedeutet, an den Montageflächen 10, 12, 14, 16 zu befestigen.

Über die Komponenten der Verstellmechanik 26 ist ein Abstand zwischen der Trägereinheit 4 und der Verfahreinheit 6 und somit auch ein Abstand zwischen den Montageflächen 10, 12 der Trägereinheit 4 und den Montageflächen 14, 16 der Verfahreinheit 6 variabel veränderbar und somit einstellbar. Weiterhin ist möglich, die Trägereinheit 4 und die Verfahreinheit 6 über die Verstellmechanik 26 relativ zueinander zu fixieren, sofern zwischen der Trägereinheit 4 und der Verfahreinheit 6 ein vorgesehener Sollwert für einen relativen Abstand eingestellt worden ist.

Über die Verstellmechanik 26 ist u. a. der Abstand zwischen der ersten Montagefläche 10 der Trägereinheit 4 und der ersten Montagefläche 14 der Verfahreinheit 6 variabel einstellbar und fixierbar. Hierzu zeigt Figur 5, dass an Bohrungen auf der ersten Montagefläche 10 der Trägereinheit 4 ein erstes Bauteil 48 festgeschraubt ist. An Bohrungen auf der ersten Montagefläche 14 der Verfahreinheit 6 ist ein zweites Bauteil 50 festgeschraubt.

Der vorgegebene Sollwert für den Abstand zwischen den beiden Bauteilen 48, 50 ist durch Variation des Abstands zwischen der Trägereinheit 4 und der Verfahreinheit 6 über die Verstellmechanik 26 einstellbar, wobei der Abstand zwischen der Trägereinheit 4 und der Verfahreinheit 6 in den Figuren 1, 2b, 2d bis 2f, 4a, 4d und 5 jeweils durch einen Doppelpfeil 52 angedeutet ist. Sobald der Abstand auf den Sollwert eingestellt ist, sind die Trägereinheit 4 und die Verfahreinheit 6 relativ zueinander zu fixieren, wobei die beiden Bauteile 48, 50 relativ zueinander fix zu positionieren sind. Dabei ist durch den Doppelpfeil 52 auch eine Richtung angedeutet, entlang der die Trägereinheit 4 und die Verfahrenheit 6 relativ zueinander zu positionieren sind.

Üblicherweise ist der Istwert eines Abstands zwischen der Trägereinheit 4 und/oder der Verfahreinheit 6 der Verstelleinheit 2 zu mindestens einem der Bauteile 48, 50, die als Werkzeuge und/oder als Komponenen einer Vorrichtung zum Bau einer Karosserie eines Kraftfahrzeugs ausgebildet sein können, über den Absolutwertgeber 28 und den Referenzschalter 29 zu ermitteln. Dieser Istwert des Abstands ist über die Verstellmechanik 26 so lange zu verändern bis der Istwert des Abstands der Trägereinheit 4 und/oder der Verfahreinheit 6 zu dem mindestens einen Bauteil 48, 50 dem hierfür vorgegebenen Sollwert entspricht.

## Patentansprüche

1. Verstelleinheit zum Positionieren von mindestens zwei Bauteilen (48, 50) relativ zueinander, die eine Trägereinheit (4), eine Verfahreinheit (6) und eine Verstellmechanik (26) aufweist, wobei die Trägereinheit (4) an einer Außenwandung mindestens eine Montagefläche (10, 12) aufweist, wobei die Verfahreinheit (6) an einer Außenwandung mindestens eine Montagefläche (14, 16) aufweist, wobei die mindestens eine Montagefläche (10, 12) der Trägereinheit (4) mit mindestens einem ersten Bauteil (48) zu verbinden ist, wobei die mindestens eine Montagefläche (14, 16) der Verfahreinheit (6) mit mindestens einem zweiten Bauteil (50) zu verbinden ist, wobei ein Abstand zwischen der mindestens einen Montagefläche (10, 12) der Trägereinheit (4) und der mindestens einen Montagefläche (14, 16) der Verfahreinheit (6) über die Verstellmechanik (26) einzustellen ist, wodurch wiederum eine Position der mindestens zwei Bauteile (48, 50) relativ zueinander einzustellen ist.

2. Verstelleinheit nach Anspruch 1, bei der die Trägereinheit (4) an der Außenwandung eine erste Montagefläche (10) aufweist, wobei die Verfahreinheit (6) an der Außenwandung eine erste Montagefläche (14) aufweist, wobei die erste Montagefläche (10) der Trägereinheit (4) parallel zu der ersten Montagefläche (14) der Verfahreinheit (6) angeordnet ist.

3. Verstelleinheit nach Anspruch 2, bei der die Außenwandung der Trägereinheit (4) eine zweite Montägefläche (12) aufweist, die relativ zu der ersten Montagefläche (10) der Trägereinheit (4) um 90° orientiert ist, wobei die erste und die zweite Montagefläche (10, 12) der Trägereinheit (4) eine gemeinsame Kante aufweisen, wobei die Außenwandung der Verfahreinheit (6) eine zweite Montagefläche (16) aufweist, die relativ zu der ersten Montagefläche (14) der Verfahrenheit (6) um 90° orientiert ist, wobei die erste und die zweite Montagefläche (14, 16) der Verfahrenheit (6) eine gemeinsame Kante aufweisen, wobei die zweite Montagefläche (12) der Trägereinheit (4) und die zweite Montagefläche (16) der Verfahreinheit (6) zueinander parallel angeordnet sind.

4. Verstelleinheit nach einem der voranstehenden Ansprüche, bei der mindestens eine Montagefläche (10, 12, 14, 16) ein Feld aus Bohrungen aufweist, über die die mindestens eine Montagefläche (10, 12, 14, 16) mit dem mindestens einen Bauteil (48, 50) zu verbinden ist.

5. Verstelleinheit nach einem der voranstehenden Ansprüche, die mindestens ein Konstruktionselement (44, 46) aufweist, das an mindestens einer Montagefläche (10, 12, 14, 16) wieder lösbar zu befestigen ist.

6. Verstelleinheit nach einem der voranstehenden Ansprüche, bei der die Verstellmechanik (26) einen elektrischen Motor, ein Getriebe, eine Trapezgewindespindel (36), eine Trapezgewindemutter (38) sowie mindestens eine Linearführungsanordnung aufweist, über die die Trägereinheit (4) und die Verfahreinheit (6) relativ zueinander zu positionieren sind.

7. Verstelleinheit nach einem der voranstehenden Ansprüche, die mindestens ein Modul aufweist, mit dem ein Abstand zwischen den mindestens zwei Bauteilen (48, 50) sensorisch zu erfassen ist.

8. Verstelleinheit nach einem der voranstehenden Ansprüche, die als Komponente einer Vorrichtung zum Bauen einer Karosserie eines Kraftfahrzeugs ausgebildet ist.

9. Verfahren zum Positionieren von mindestens zwei Bauteilen (48, 50) relativ zueinander mit einer Verstelleinheit (2), die eine Trägereinheit (4), eine Verfahreinheit (6) und eine Verstellmechanik (26) aufweist, wobei die Trägereinheit (4) an einer Außenwandung mindestens eine Montagefläche (10, 12) aufweist, wobei die Verfahreinheit (6) an einer Außenwandung mindestens eine Montagefläche (14, 16) aufweist, wobei die mindestens eine Montagefläche (10, 12) der Trägereinheit (4) mit mindestens einem ersten Bauteil (48) verbunden wird, wobei die mindestens eine Montagefläche (14, 16) der Verfahreinheit (6) mit mindestens einem zweiten Bauteil (48, 50) verbunden wird, wobei ein Abstand zwischen der mindestens einen Montagefläche (10, 12) der Trägereinheit (4) und der mindestens einen Montagefläche (14, 16) der Verfahreinheit (6) über die Verstellmechanik (26) eingestellt wird, wodurch wiederum eine Position der mindestens zwei Bauteile (48, 50) relativ zueinander eingestellt wird.

10. Verfahren nach Anspruch 9, bei dem zwischen den mindestens zwei Bauteilen (48, 50) ein Abstand mit einem Sollwert einzustellen ist, wobei ein Istwert des Abstands mit mindestens einem Modul zum sensorischen Erfassen des Abstands erfasst wird, wobei bei einer Abweichung des Istwerts von dem Sollwert ein Abstand zwischen der Trägereinheit (4) und der Verfahreinheit (6) angepasst wird.

11. Verfahren nach Anspruch 10, bei dem ein Differenzwert zwischen dem Sollwert und dem Istwert gebildet wird, wobei ein Abstand zwischen der Trägereinheit (4) und der Verfahreinheit (6) um den Differenzwert verändert wird.
